# EUROPEAN PATENT APPLICATION

(11) **EP 0 999 510 A2**
(43) Date of publication of application: **10.05.2000**
(21) Application number: 99308308.8
(22) Date of filing: 21.10.1999
(51) Int. Cl.: G06F 17/60

(54) **Methods and apparatus for automated item return processing**

(30) Priority: 02.11.1998 US 184800
(71) Applicant: NCR INTERNATIONAL INC., Dayton, Ohio 45479 (US)
(72) Inventor: Dejaeger, Wilfried Elie Yves, Duluth, Georgia 30097 (US)
(74) Representative: Williamson, Brian

(57) **Abstract**

A return system for simplifying the process of a return transaction in which merchandise is returned to a retailer for credit or other adjustment. A customer provides information at one of a number of customer-operated stations, which may include in-store kiosks or other in-store customer-operated stations, or customer-owned personal computers. The customer-operated stations operate under control of a central computer. The central computer may directly supervise the transfer of information, which may control the customer-operated station directly or may periodically exchange information with the customer-operated station, the customer-operated station operating under control of its own software. The central computer collects and stores the return information for immediate processing or to perform analysis functions and customer satisfaction follow-up transactions. The return information is also transmitted to a return center to notify one or more human operators at the return center of the pendency of a return and to provide the operators with the return information.

## Description

The present invention relates generally to improvements to retail transactions. More particularly, the invention relates to an advantageous automated system for collecting and processing consumer-provided information related to a transaction in which goods are returned for exchange or refund.

In the modern retailing environment, customers frequently return goods due to defects, wrong size or style, or otherwise not meeting their needs. The return transaction is typically handled by a regular cashier whose primary job is the sale of goods, or else by a dedicated staffed station devoted to returns, exchanges and other forms of customer assistance. The handling of returns by a regular cashier occupies time that a cashier would otherwise be devoting to handling the sale of goods, and forces the cashier to perform a function that is not his or her primary function. The operation of a dedicated station requires space which could otherwise be devoted to other uses, and requires special staff. Because of the greater complexity of the return transaction compared to the sales transaction, the return transaction typically requires more time and can cause substantial queuing and long waits in periods of heavy demand, with increased inconvenience for the customer and lessened customer satisfaction. In each case, the merchant does not know when a particular return is coming, and it is often difficult to predict even the volume of returns on a particular day, causing the possibility of inefficient staffing levels at a retailer's facility.

The modern retail customer often has considerable facility with electronic devices, and is almost as adept at the basic operation of a simple device as is an operator trained in using that device. Moreover, customers often have computer equipment at home, which could be adapted to communicate with computers at a merchant's location in order to facilitate a return of goods. It would smooth the return operation considerably, benefiting both customers and retailers, if the customer were to be provided with an arrangement to carry out the process with minimal intervention by a human operator.

In accordance with a first aspect of the present invention, an electronic self-service station is activated by customer intervention and presents an electronic form to the customer. The customer uses this form to provide personal information as well as information about the product he or she is returning. The identity of the product may be manually entered by the customer, or the customer may use a bar code scanner on the self-service station to scan a bar code on the product packaging. The self-service station stores the customer information in a customer database, which may include data relating to customer preference. The self-service station also stores information relating to the particular return transaction. The customer identification information and preference information may be used in marketing, and the transaction information may be used to construct a letter of apology for the necessity of the return, or to indicate other incentives to build customer loyalty. The self-service station may also advantageously include a document printer for printing coupons or vouchers. The self-service station communicates with a remote location, typically a central location in the retail establishment, giving notification of the return and ordering a replacement item if chosen by the customer, or preparing documents for inspection and validation by an employee of the merchant.

An embodiment of the present invention will now be described, by way of example, with reference to the accompanying drawings, in which:
Figure 1 illustrates an automated merchandise return system in accordance with the present invention;
Figure 2 illustrates a self-service station for use in an automated merchandise return system in accordance with the present invention;
Figure 3 illustrates a customer-operated computer system for communication with an automated merchandise return system in accordance with the present invention;
Figure 4 is a more detailed illustration of a suitable central computer for use in an automated merchandise return system in accordance with the present invention; and
Figure 5 is a flowchart illustrating the steps of a method of automated merchandise return processing in accordance with the present invention.

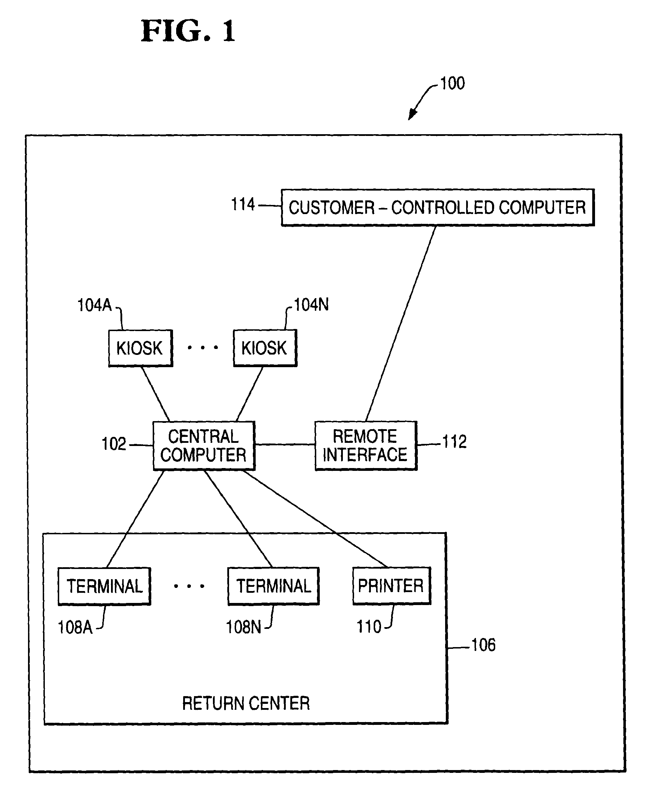

Figure 1 illustrates an automated merchandise return system 100 suitable for use in a retail establishment. The automated return system includes a central computer 102, which communicates with a plurality of automated self service stations, such as illustrated kiosks 104A...N. Each of the automated kiosks 104A...N receives information from a customer and communicates the information to the central computer 102. The central computer 102 may direct the operation of the automated kiosk 104A...N, or alternatively the automated kiosk 104A...N may operate under control of self-contained software and periodically exchange information with the central computer 102. The central computer 102 communicates with one or more human operators at a return center 106, typically via a number of operator terminals 108A...N, each of which can display information about an incoming return and notify a human operator of a pending return. For lower volume operation, the return center 106 may include a printer 110, which prints a return ticket for each return, each return ticket being received and acted upon by a human operator. The human operator is notified by a terminal 108A...N or the printer 110 that a return is coming in, and is also informed of the details of the return. The human operator reads the return information, which includes the identity of the customer, the time of the return, and the desired disposition of the return. If a replacement is desired, the human operator retrieves the replacement from stock. When the customer approaches the return center 106, the human operator receives the returned merchandise and verifies that the return conforms to requirements, and completes processing of the return. Processing may suitably include verifying the acceptability of a return. For example, the human operator may confirm receipt of the returned merchandise and may inspect the merchandise to verify that no misuse or abuse of the merchandise has occurred. Once the return is verified as acceptable, the operator issues the appropriate return credit, which may consist of cash, a charge credit, or a gift certificate.

The merchandise return system 100 also preferably includes a remote interface 112 whereby a customer can communicate with the central computer 102 through a customer-operated remote computer system 114. Communication is accomplished through a direct dialup connection, through the Internet, or by other suitable means. The central computer 102 receives information about the desired return through the customer-operated computer system 114 and provides information to the customer through the customer-operated computer system 114. The central computer 102 may directly control the exchange of information through the customer-operated computer system 114, or alternatively the customer-operated computer system 114 may operate under control of self-contained software and periodically exchange information with the central computer 102. Upon completing a return transaction, the central computer 102 notifies human operators at the return center 106 of the pending return, provides the time of the expected return and the identity of the customer. On the customer's arrival, the human operators at the return center 106 are able to complete processing of the return with a minimum of delay. Financial settlement may be made with the customer through cash, a store credit voucher, or another form of credit including credits to a customer charge card. This settlement may be performed at the return center 106 upon verification of the returned item, or may alternatively be given at one of the kiosks 104A...N in the form of a contingent or revocable credit. A customer account may be credited, or a voucher issued with the credit or voucher being revoked if the item is not in fact returned. Alternatively, necessary information can be taken for issuing a credit, with the credit to be issued upon verification of the return of the item.

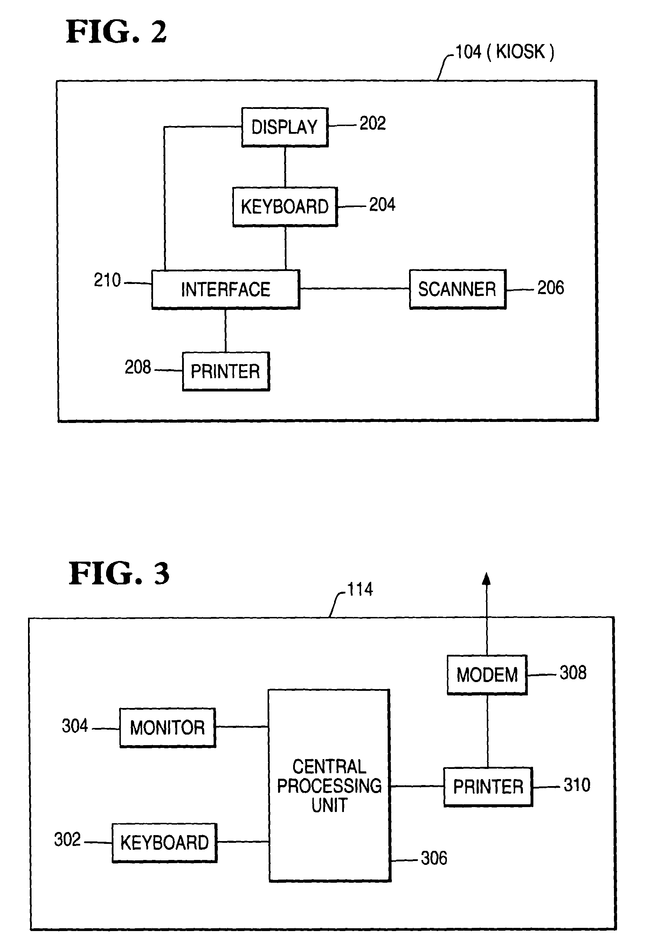

Figure 2 illustrates in greater detail a self-service station implemented as a kiosk 104 suitable for use as one of the kiosks 104A...N of Figure 1. The kiosk 104 includes a keyboard 202 and a display 204 for customer communication. The kiosk 104 also includes a scanner 206 whereby a customer may scan a bar code such as is typically affixed to merchandise packaging, for convenience in entering item identification information. The customer may alternatively or additionally enter identification information via the keyboard 202. The kiosk 104 also includes a card reader 207 for reading financial information, such as credit card or debit card information. The customer may alternatively enter financial information via the keyboard 202. Collecting customer financial information allows the customer to conduct the entire return transaction without the intervention of a human operator. The kiosk 104 preferably presents the option to the customer of performing the return transaction with or without human intervention. If the customer chooses to perform the transaction without human intervention, the customer is allowed to enter the item identification information and customer financial information at the kiosk 104 and deposit the returned item in a secure area. If the customer fails to deposit the returned item, or deposits an empty box, a charge will be issued against the customer for any credit issued, using the financial information provided at the kiosk 104. The kiosk 104 also includes a printer 208 for printing vouchers, statements and other documents for presentation at the return center 106 illustrated in Figure 1. The kiosk 104 further includes an interface 210 connected to the keyboard 202, the display 204, the scanner 206, and the printer 208. The interface 210 is also connected to the central computer 102, which receives information from and sends information to the kiosk 104. The interface 210 may suitably be a computer such as a personal computer, or may alternatively be a terminal interface suitable for connection to a computer.

Figure 3 illustrates in greater detail a customer-operated remote computer 114 of a type suitable for connection with the central computer 102 illustrated in Figure 1. The remote computer 114 suitably includes a keyboard 302, monitor 304 and central processing unit 306, and typically communicates with the central computer 102 though a modem 308 (which is shown here as an external device but which may alternatively be contained within the central processing unit 306), which establishes a dialup connection to the Internet, allowing communication with the remote interface 110 illustrated in Figure 1. Alternatively, the modem 308 may establish a direct dialup connection with the remote interface 110. The remote computer 114 may suitably communicate with the central computer 102 through the use of standard software such as a web browser software package, which allows transfer of information via the Internet between the remote computer 114 and the central computer 102, or modem software, which allows direct transfer of information between the remote computer 114 and the central computer 102. The central computer 102 may suitably transmit a custom-designed standard data entry form with fields for customer and product information, desired time, date and location of the return, and reason for the return. The central computer then stores this information for later use, and also transmits it to a human operator through a terminal 106 or printer 108 as illustrated in Figure 1. The customer-operated computer 114 may suitably be equipped with a printer 310, whereby the customer may print vouchers and information tickets transmitted by the central computer 102 to the customer-operated computer 114. In order to provide security, any vouchers or other media of exchange my be presented for validation at the return center 106, where they will be examined and their information compared with the information contained in the central computer 102.

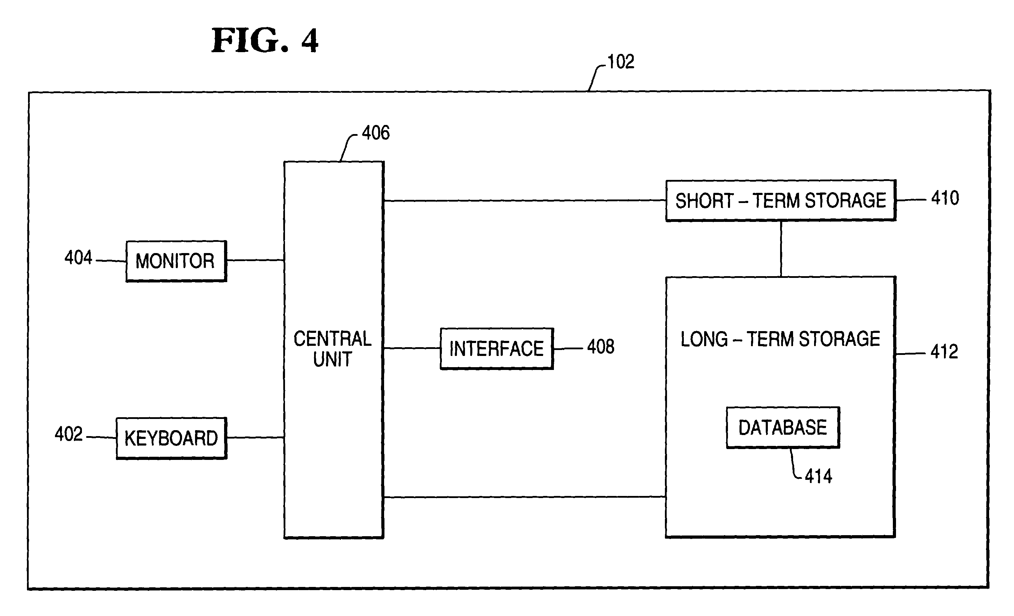

Figure 4 illustrates in further detail the central computer 102 shown in Figure 1. The central computer includes an operator interface such as a keyboard 402 and monitor 404, a central unit 406 for receiving, transmitting and processing data, and a multi-user interface 408 for communicating with various remote interfaces such as a kiosk 104, a terminal 108, and a customer-controlled computer 114, illustrated in Figure 1. The central computer 102 further includes short-term storage 410 needed for carrying out its functions and long-term storage 412 for the storage of programs and data. The central computer 102 preferably maintains in long-term storage 412 a database 414 containing return information, including items returned, their costs, the reasons for return, and identifying information concerning each customer making a return. This information can be retrieved and used in quality control, marketing and customer loyalty operations, such as tracking a number of returns for an item and reasons an item is repaired, tracking returns for a particular customer or group of customers in order to understand how to improve customer satisfaction, maintaining information for an incentive program or a letter of apology to be directed toward customers who must return an item, tracking customer abuse of the return process, or the like. The central computer is able to receive and transmit the data necessary to perform each individual transaction, and to maintain data for customers and returned items.

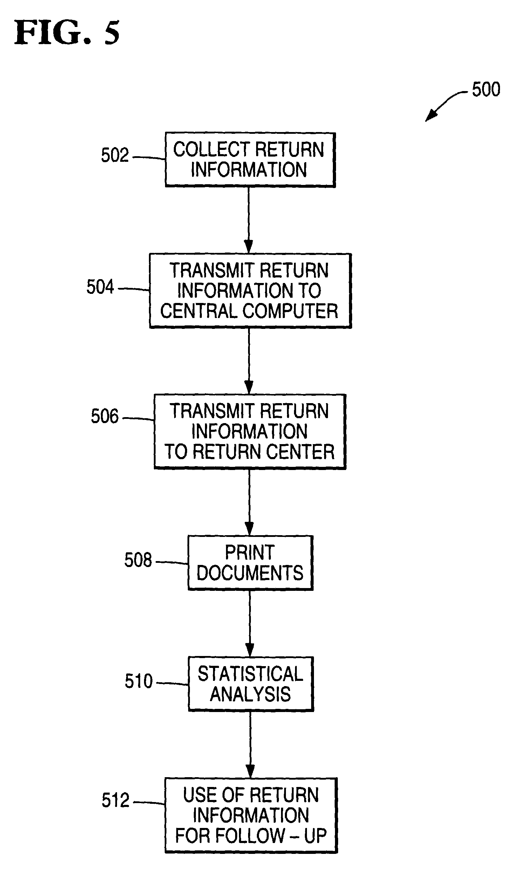

Figure 5 is a flowchart illustrating a method 500 of return processing according to the present invention. At step 502, return information relating to a return transaction is collected at a customer-operated station such as an in-store kiosk or other in-store customer-operated station, or a customer-owned personal computer. At step 504, the customer-operated station transmits the return information to a central computer for storage and processing. The customer-operated station may also collect customer financial information for use in processing the return transaction. This information may be used to issue a contingent or revocable credit which will become final when the item is verified to be returned in compliance with merchant return policy. At step 506, the return information is transmitted to a return center for action by one or more human operators. At step 508, the customer-operated station prints documents for submission at the return center, or alternatively issues a credit using the customer financial information collected at step 504. At step 510, the item is returned. The item may be returned to a human operator at a return center, who validates the return and issues appropriate credit or validates return documents issued at the customer-operated station, or alternatively the customer deposits the returned item in a secure location or ships it to the retailer, with the transaction being completed upon the proper return of the item to the merchant. At step 512, the stored return information is subjected to statistical analysis to provide product defect information and other information relating to customer satisfaction. At step 514, the stored return information is used to provide follow-up to the return transaction, by further communicating with the customer.

While the present invention is disclosed in the context of a presently preferred embodiment, it will be recognized that a wide variety of implementations may be employed by persons of ordinary skill in the art consistent with the above discussion and the claims which follow below.

## Claims

1. An automated merchandise return system comprising:
a central computer; and one or more customer-operable return stations capable of communicating with the central computer, for receiving return information relating to a returned item transaction including item information identifying a returned item, transaction information identifying a transaction in which the item was originally purchased, customer information identifying the customer, and defect information identifying a reason for the return, each of the plurality of return stations being operative to store the return information and to receive and store instructions from the central computer and to transmit information to and receive instructions from the central computer, each of the return stations being further operative to print documents under direction from the central computer or from a self-contained computer within the return station.

2. A return system as claimed in 1, wherein one or more of the customer-operated computers is a located within a self-service station at a retail location, each of the self-service stations including a printer for printing vouchers and other documents showing a return transaction, a label reader for reading an identifying label on an item to be returned, and a display and keyboard for exchanging information with a customer.

3. A return system as claimed in 2, wherein the label reader is a scanner for reading a barcode and the identifying label is a barcode.

4. A return system as claimed in any preceding claim, wherein each of the customer operated computers is operable to collect financial information from a customer in order to issue a charge against a customer if a return is improperly made.

5. A return system as claimed in any preceding claim, including a return center for final processing of the returned item transactions initiated at one of the one or more return stations, the return center including one or more communication devices for exchanging information between a human operator and the central computer or the customer-operated computer.

6. A return system as claimed in any preceding claim, wherein one or more of the customer-operated computers is a personal computer owned by the user, and wherein the central computer is operative to communicate with the personal computer through a remote link, the central computer providing a standardized form for customer entry of return information and receiving the information from customer entries to the standardized form, the central computer being further operative to transmit to the return center the information received from the customer entries.

7. A return system as claimed in claim 6, wherein the personal computer communicates with the central computer via the Internet.

8. A return system as claimed in any preceding claim, wherein the communication devices included in the return center include one or more terminals and one or more printers.

9. A return system as claimed in claim 8, wherein the central computer is operative to collect and maintain return information, to perform statistical analysis on the return information in order to track product defects and customer satisfaction, and to use the return information to perform follow-up communicate with customers about the return transactions.

10. A method of automated processing of a return transaction, comprising the steps of:
collecting return information from a customer at a customer-operated computer;
transmitting the return information from the customer-operated computer to a central computer;
collecting the returned item from the customer; and
issuing a credit to the customer based on the return information collected from the customer.

11. A method as claimed in claim 10, wherein the customer-operated computer is included in one of one or more automated self-service stations at a retail location, each of the one or more self-service stations being operative to collect return information from the customer, transfer the return information to the central computer, and print return and credit documents for the customer.

12. A method as claimed in claim 10 or claim 11, wherein the step of collecting the returned item from the customer includes receiving the item at a return center and processing and validating the return and credit documents at the return center.

13. A method as claimed in any of claims 10 to 12, wherein each of the one or more automated self-service stations is adapted to receive financial information from the customer for use in issuing or rescinding customer credit based on the outcome of the return transaction.

14. A method as claimed in any of claims 10 to 13, wherein the step of collecting the returned item from the customer includes providing a secure location for customer deposit of the item and later verifying presence and condition of the returned item and issuing or rescinding customer credit based on the presence and condition of the returned item.

15. A method as claimed in any of claims 10 to 14, wherein one or more of the customer-operated computers is a customer-owned computer communicating with the central computer over a remote interface linking the customer-owned computer and the central computer.

16. A method as claimed in claim 15, wherein the remote interface is the Internet.
